# EUROPEAN PATENT SPECIFICATION

(11) **EP 3 202 468 B1**
(45) Date of publication and mention of the grant of the patent: **10.07.2019**
(21) Application number: 15847839.6
(22) Date of filing: 02.12.2015
(51) Int. Cl.: A63B 69/16, A63B 22/08, F03G 5/00, H02K 17/00, G05F 3/00, A63B 22/06, A63B 21/005

(54) **ENERGY RECOVERY SYSTEM**
ENERGIERÜCKGEWINNUNGSSYSTEM
SYSTÈME DE RÉCUPÉRATION D'ÉNERGIE

(30) Priority: 03.10.2014 ES 201431467
(43) Date of publication of application: 09.08.2017
(73) Proprietor: Martin Asensio, Jaime, 28046 Madrid (ES); Asensio Barabash, Ignacio, 28046 Madrid (ES)
(72) Inventor: Martin Asensio, Jaime, 28046 Madrid (ES); Asensio Barabash, Ignacio, 28046 Madrid (ES)
(74) Representative: Polo Flores, Luis Miguel
(86) International application number: PCT/ES2015/070874
(87) International publication number: WO 2016/051010

(56) References cited:
- EP-A1- 2 638 936
- WO-A1-2014/146386
- WO-A1-2014/153537
- AR-A1- 063 961
- CA-A1- 2 800 950
- DE-A1- 2 543 507
- ES-A1- 2 289 954
- ES-A1- 2 333 838
- ES-A1- 2 340 348
- ES-T3- 2 377 699
- ES-U- 1 074 760
- GB-A- 2 483 161
- US-A- 5 267 925
- US-A1- 2011 263 384

## Description

### OBJECT OF THE INVENTION

The present invention relates to a system of recovering the energy generated by pedaling, the obvious purpose of which is to take advantage of the energy produced by pedaling on a stationary bicycle, or on a normal bicycle placed on a stationary support, so that the pedaling energy can be utilized by being transformed into electrical energy. Document GB2483161 discloses a system according to the preamble of claim 1.

More specifically, the object of the invention is to recover the energy that is lost on stationary bicycles when users are engaged in physical exercise, as well as to promote citizen awareness and sensitivity about the demand for energy in our daily activities, all without the need to use batteries or electricity storage means.

The technical field or sector to which the invention applies is the production and generation of energy, as well as the end consumption thereof, etc.

### BACKGROUND OF THE INVENTION

Currently, there is an ever-growing concern about the environment, sports and of course the cost of energy; consequently it would be very useful and desirable to be able to use the energy lost in some physical activities, specifically the energy produced by pedaling on stationary bicycles.

Although the inclusion of alternators or dynamos for generating electrical energy on bicycles is known, that solution is applied to the electrical elements that are involved in said bicycles, so that it cannot be utilized for other applications or external areas.

Currently there are installations in which various stationary bicycles are grouped together in a circuit, which are provided with the aforementioned equipment, supplying a set of batteries or accumulators in order to take advantage of said generated energy.

The problem such facilities have is that the batteries they use are expensive, are large and require constant maintenance; consequently it would be desirable to have other means for utilizing said generated energy.

### DESCRIPTION OF THE INVENTION

According to the invention, a system as claimed in claim 1 is provided. The proposed system, part of the structure known and previously referred to, in which a series of stationary bicycles participate that are set up in a room or specific place, in which said bicycles are combined to drive respective motors/generators, in such a way that the electric energy thus generated can be utilized for external purposes; consequently, the purpose of the system is to create a space where leisure, awareness of energy efficiency, solidarity and physical activity are all combined, exploring the use of the energy produced by pedaling resulting from leisure activities, or in order to obtain the economic return of pedaling, including being able to invest it in projects of a social nature associated with the project.

Obviously, the creation of a space in which energy is generated through stationary bicycles motivates the users to perform a physical activity based on pedaling in such a way that the user himself is the motor and generator of the energy, the electrical installation of the gymnasium or premises on which the bicycles are installed being able to utilize said energy and directly benefit therefrom.

It is evident that the benefit generated, for example in a company in which the system of the invention is applicable, reverts to the users through different forms created both for awareness of energy savings and production, as well as for the economic support of proposed projects of a social nature, for the promotors as well as for the user himself.

In addition to the utilization of stationary bicycles, the system allows the use of normal bicycles placed on fixed support, which makes it possible to always take advantage of a product available on the market for generating energy, taking it into account for use as a database for producing consumption and production statistics.

Starting with this conventional structure, the invention is based on the use of asynchronous slip-ring motors/generators associated with the bottom bracket of bicycle cranks, so that through the use of this type of motor/generator, energy storage circuits with their respective accumulators or batteries are not required. Thus, the energy can be utilized directly in the facility where the bicycles are set up.

The asynchronous motor is used as generator connected to the alternating current mains, its slip-rings injecting a voltage from a voltage-controlled variable frequency oscillator, so that when it is turned by pedaling effect, it functions as an asynchronous generator. The rotational speed of the motor shaft and the voltage and current vectors in the asynchronous motor are also measured. Because the generated power and rotational speed are known in this way, the braking torque is obtained. Said braking torque is compared with the setpoint torque provided by a potentiometer or similar. The error signal obtained varies the frequency of the voltage injected in the slip rings, so that the braking torque is the one specified by the setpoint.

A microcontroller has the task of regulation. It obtains the generated power from measuring the vectors of the mains voltage and generated current. The speed is deduced from a measuring device integral with the motor shaft.

The output is an electric signal that is applied to the variable frequency generator.

In this way, the motor acts as a generator so that the energy generated by pedaling is an alternating current in phase with the voltage of the mains. In other words, by forcing the motor to turn by pedaling, instead of receiving the alternating current by the stator the motor will generate current through said stator and to the electrical installation where the system is installed, so that in the end the effect would be that a portion of the electrical consumption of the location would no longer be consumption from the conventional mains.

Ultimately, the system of the invention establishes or offers an innovative space that is different due to transformation of human energy into electrical energy, achieving an environment of awareness which also enables the financing of the project, as well as a personal economic benefit, in addition to the one already received in the form of health, all this not necessarily by obtaining greater savings by creating more efficient apparatuses, but instead making users more aware of the consumption by said apparatuses, and this can be done in campaigns like water saving, which attempts to sensitize consumers through numbers and statistics so that they are aware of the implications of their actions.

Furthermore, it should be mentioned in relation to environmental impact that the underlying idea of the energy generation project through the exercise of pedaling, not by the volume of energy but rather by the activity employed in the generation, is accompanied by a human physical activity that makes it possible to reflect about the management of energy sources and processes of energy training at the global level. Consequently, the savings arising from consumer awareness is comparable to the savings in energy, environment and economy that has occurred in the trash bag industry, because awareness campaigns cause people to become aware of the impact of their poor management, enabling a lowering of costs of production and waste management in unparalleled percentages of resources by improving the process of manufacturing or recycling the bags themselves.

The project in which the system of the invention takes form will act in turn as a center of environmental awareness as well as a starting and launching point for projects having a common foundation.

Finally, it should be mentioned that the service offered based on the system of the invention seeks to create a new market that explores the use of human energy produced in pedaling in order to enjoy its applications and dedicate its production to different purposes, so that the public can benefit, although not exclusively, from the growing social awareness of the importance the environment, sports and the user himself as consumer have on our social and collective well-being.

Ultimately, what is obtained is an efficient, simple installation that needs no energy storage means or on-going maintenance, involving motors/generators that cost less than direct current motors. Moreover, the energy is better utilized since there is no need to transform it into alternating current for use, unlike what occurs with direct-current motors.

### DESCRIPTION OF THE DRAWINGS

To complement the description provided and in order to assist in a better comprehension of the characteristics of the invention, the present specification is accompanied by a set of drawings, which are an integral part thereof, in which the following has been represented by way of illustrative and non-limiting character:
Figure 1 represents a group of stationary bicycles whose bottom brackets are connected to an alternator the output of which is connected to a common electric point for electric energy harnessing.
Figure 2 shows a block diagram of the elements that participate in the electrical array of the system, including the motor/generator.

### PREFERRED EMBODIMENT OF THE INVENTION

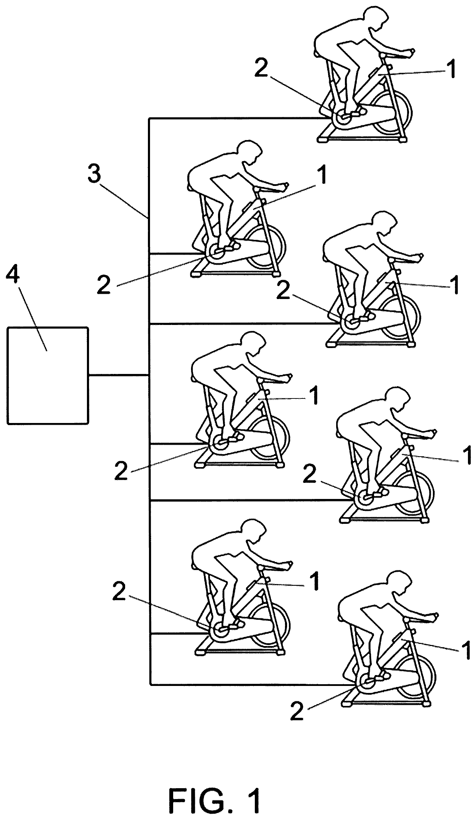

As can be seen in figure 1, the system of the invention is based on the use of a plurality of stationary bicycles (1), in such a way that the respective bottom bracket (2) of said bicycle (1) is associated with a generator of electric energy, so that the energy produced from the pedaling by a person is connected to the electric mains (4) of the installation, through the respective wiring (3), without the need to use batteries or storage elements.

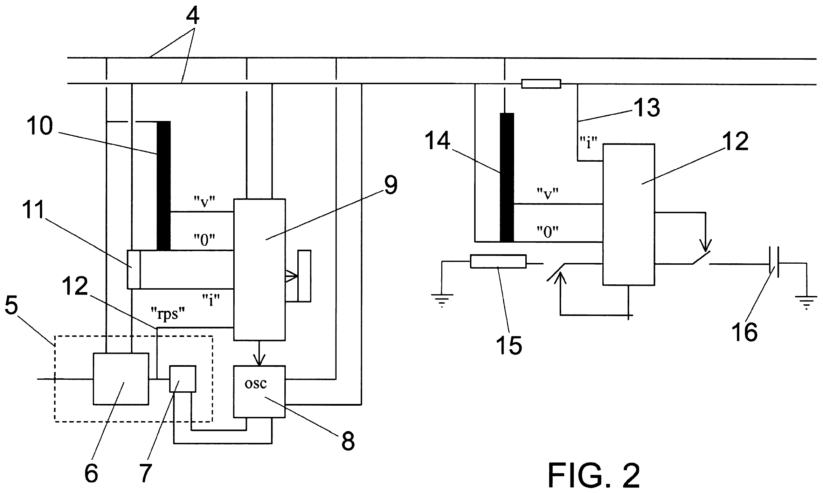

More specifically, according to the concept presented above and as can be observed in figure 2, the generator associated with the bottom bracket of each bicycle is embodied specifically in an asynchronous slip-ring motor (5), in which the stator (6) is directly connected to the electric mains (4).

In turn, the shaft of the motor and consequently its rotor (7) is connected to the bottom bracket of the bicycle through the respective transmission.

An oscillator (8) of variable frequency around the mains frequency is connected to said rotor (7), specifically to the slip-ring system, which makes it possible to vary the motor's electrical slip, irrespective of the mechanical speed and therefore of the power generated by the motor.

The microcontroller (9) measures the voltage and current vectors by means of devices for each (in the drawing, referenced as 10 and 11 respectively). From said devices and from the measurement of rotational speed, the device referenced in the drawing as 12, the braking torque is obtained. By comparing it with the desired one, established by a potentiometer or similar, the signal is obtained which, by being applied to the variable frequency oscillator, ensures that the braking torque is equal to the desired one.

The information collected by said controller would be stored in a centralized database in order to be able to produce generating statistics, as well as to offer any type of applications to the user.

The concept of the asynchronous slip-ring generator is innovative because the energy generated by the pedaling is generated in the form of alternating current that is in phase with the energy received by the stator. Specifically, by forcing the motor to turn by pedaling, instead of receiving alternating current by the stator the motor would generate current through said stator and on to the electrical installation of the room. In the end, the effect would be that a portion of the electricity consumption would no longer be from the conventional mains, since the the room's electrical installation would be injecting the generated energy.

With this structure an additional circuit is required to prevent the balance of generated energy from becoming positive. A switched resistive load is used for this, managed by a microcontroller (12), as shown in the figure, according to the following process:
The switched load is represented as (15). The microcontroller (12) measures the voltage through the device (14) and the current by the device (13). It uses these measurements to calculate the balance of generated power and acts on the switched resistive load (15) in such a way that said balance is always zero.

The same applies to the reactive power that the motor consumes. Said power is supplied to it in a similar way by means of a switched capacitor (16). As a collateral effect, the device achieves a *cos φ* = *1*, (consumption or generation are zero reactive) with the concomitant improvement in the electric bill.

## Claims

1. Energy recovery system of the type that use one or more bicycles to drive energy generation means, connected to an alternating current electric mains, **characterized in that** as energy generation means the bicycles each incorporate asynchronous slip-ring motor (5), in which the stator (6) is connected directly to the electric mains (4), while the shaft of the motor and consequently its rotor (7) are connected by the respective transmission to the bottom bracket of the bicycle, wherein the rotor (7), specifically the slip-ring motor, is connected to a voltage-controlled variable frequency oscillator (8) that varies around the frequency of the mains, which enables the motor's electrical slip to be varied, irrespective of the mechanical speed and consequently of the power generated by the motor; wherein the energy recovery system further comprises a microcontroller (9) which includes devices (10,11,12) for measuring the voltage and current vectors and for measuring the rotational speed, in order to obtain the braking torque, as well as means of comparison of the obtained braking torque with a setpoint torque provided by a potentiometer, in such a way that through a microcontroller's respective programming firmware an error signal is generated and applied to the variable frequency oscillator (8) to vary the frequency of the voltage injected in the slip-ring motor (5) so that the braking torque is equal to the one specified by the setpoint; with the particular feature that a circuit of the microcontroller is complemented with an additional circuit to control the generated energy, both the excess energy generated as well as regulation of the reactive energy, in which a second microcontroller (12) participates, provided with means for measuring the mains current through a further device (13) and for measuring voltage through another device (14) and means of calculation of the balance of generated power, said second microcontroller having a switched connection to the mains of a switched resistive load (15) of excess energy consumption in the mains in a way that the balance of generated power is always zero, as well as a switched capacitor (16) which meets the reactive energy needs of the mains.

## Patentansprüche

1. Energierückgewinnungssystem, bei dem mittels eines Fahrrads oder mehrerer Fahrräder Energieerzeugungsmittel angetrieben werden, die mit einem Wechselstromnetz verbunden sind, **dadurch gekennzeichnet, dass** jedes Fahrrad als Energieerzeugungsmittel einen asynchronen Schleifringmotor (5) umfasst, bei dem der Stator (6) direkt mit dem Stromnetz (4) verbunden ist, während die Welle des Motors und somit sein Läufer (7) durch die entsprechende Kraftübertragung mit dem Tretlager des Fahrrads verbunden sind, wobei der Läufer (7), speziell der Schleifringmotor, mit einem spannungsgeregelten durchstimmbaren Oszillator (8) verbunden ist, der um die Netzfrequenz variiert, wodurch der elektrische Schlupf des Motors variiert werden kann, unabhängig von der mechanischen Drehzahl und somit von der durch den Motor erzeugten Leistung; wobei das Energierückgewinnungssystem zudem einen Mikrocontroller (9) umfasst, der über Einrichtungen (10, 11, 12) zum Messen der Spannungs- und Stromvektoren und zum Messen der Drehzahl, um das Bremsmoment zu ermitteln, verfügt sowie über Einrichtungen zum Vergleichen des ermittelten Bremsmoments mit einem durch ein Potentiometer vorgegebenen Drehmomentsollwert, wobei durch eine entsprechende Programmierfirmware des Mikrocontrollers ein Fehlersignal erzeugt und am durchstimmbaren Oszillator (8) bereitgestellt wird, um die Frequenz der in den Schleifringmotor (5) eingespeisten Spannung so zu variieren, dass das Bremsmoment dem vorgegebenen Sollwert entspricht; mit dem besonderen Merkmal, dass es neben der Mikrocontrollerschaltung eine zusätzliche Schaltung zur Steuerung der erzeugten Energie, sowohl der überschüssigen erzeugten Energie als auch der Blindenergie, gibt, wobei ein zweiter Mikrocontroller (12) beteiligt ist, der über Mittel zum Messen des Netzstroms durch eine weitere Einrichtung (13) und zum Messen der Spannung durch eine weitere Einrichtung (14) sowie zum Berechnen der Bilanz der erzeugten Leistung verfügt und der eine geschaltete Verbindung zum Netz einer geschalteten ohmschen Last (15) mit überschüssigem Energieverbrauch im Netz hat, sodass die Bilanz der erzeugten Leistung immer null ist, sowie einen Schaltkondensator (16), der die Blindenergieanforderungen des Netzes erfüllt.

## Revendications

1. Système de récupération d'énergie du type qu'utilisent une ou plusieurs bicyclettes pour entraîner le moyen de production d'énergie, connecté à un réseau électrique à courant alternatif, **caractérisé en ce que** comme moyen de production d'énergie, les bicyclettes incorporent chacune un moteur asynchrone à bagues collectrices (5), dans lequel le stator (6) est connecté directement au réseau électrique (4), alors que l'axe du moteur et par conséquent son rotor (7) sont connectés par la transmission respective au petit pignon de la bicyclette, dans lequel le rotor (7), plus précisément le moteur à bagues collectrices, est connecté à l'oscillateur à fréquence variable commandé en tension (8) qui varie autour de la fréquence du réseau, ce qui permet de faire varier le glissement électrique du moteur, indépendamment de la vitesse mécanique et par conséquent de la puissance produite par le moteur ; dans lequel le système de récupération d'énergie consiste en outre en un microcontrôleur (9) qui comprend des dispositifs (10, 11, 12) destinés à mesurer les vecteurs de tension et de courant et destinés à mesurer la vitesse de rotation, afin d'obtenir le couple de freinage, ainsi que le moyen de comparaison du couple de freinage obtenu avec le point consigne de couple fourni par un potentiomètre, de manière que par l'intermédiaire d'un micrologiciel de programmation respectif du microcontrôleur, un signal d'erreur est produit et appliqué à l'oscillateur à fréquence variable (8) pour faire varier la fréquence de la tension injectée dans le moteur à bagues collectrices (5) de manière à ce que le couple de freinage soit égal à celui spécifié par le point de consigne ; avec la fonction particulière qu'un circuit du microcontrôleur est complété avec un circuit additionnel pour commander l'énergie produite, à la fois l'énergie en excès produite ainsi que la régulation de l'énergie réactive, dans lequel un second microcontrôleur (12) participe, pourvu du moyen destiné à mesurer le courant du réseau secteur par l'intermédiaire d'un autre dispositif (13) et destiné à mesurer la tension par l'intermédiaire d'un autre dispositif (14) et le moyen de calcul de l'équilibre de la puissance produite, ledit second microcontrôleur présentant une connexion commutée sur le réseau d'une charge résistive commutée (15) de la consommation d'énergie en excès dans le réseau d'une manière telle que l'équilibre de la puissance produite soit toujours zéro, ainsi qu'un condensateur commuté (16) qui se relie l'énergie réactive du réseau.
